# EUROPEAN PATENT APPLICATION

(11) **EP 3 200 439 A1**
(43) Date of publication of application: **02.08.2017**
(21) Application number: 17152252.7
(22) Date of filing: 19.01.2017
(51) Int. Cl.: H04N 1/00

(54) **DYNAMIC FONT SIZE MANAGEMENT SYSTEM AND METHOD FOR MULTIFUNCTION DEVICES**

(30) Priority: 29.01.2016 US 201615010201
(71) Applicant: Kabushiki Kaisha Toshiba, Tokyo 105-8001 (JP); Toshiba TEC Kabushiki Kaisha, Tokyo 141-0032 (JP)
(72) Inventor: ZHANG, Jia, Irvine, CA California 92618 (US); SU, William, Irvine, CA California 92618 (US)
(74) Representative: Takeuchi, Maya

(57) **Abstract**

A document processing system and method includes a display and an embedded controller that modifies the font used on the display based on the distance between a user and the display. When the user moves closer to the display, the font size of text displayed on the display is increased to enhance readability of the text. The font size of the text is decreased when the user moves further away from the display. The user can lock the font size of the text when the font is at an acceptable size to the user. All or a portion of the text that is displayed on the display can be dynamically resized. Different fonts also can be used to enhance readability for the user. The font also can be selected based on the user identity or user demographic information.

## Description

### TECHNICAL FIELD

The subject application teaches embodiments that relate generally to automatically configuring font sizes on a display of a multifunction printer, and specifically to dynamically adjusting font sizes on a display of a multifunction printer based on a user's distance from the display.

### SUMMARY

In an example embodiment, a document processing system includes an embedded controller and a display in communication with the embedded controller. The embedded controller is configured to determine a font used on the display based on the distance between a user and the display. The font is used for at least a portion of the text displayed on the display. The embedded controller can be further configured to dynamically modifying the font, in substantially real time, based on changes in the distance between the user and the display. For example, the font can be increased as the distance between the user and the display decreases, and the font can be decreased as the distance between the user and the display increases. A user can lock the font using a user selectable input. A sensor associated with the document processing system can sense the distance between the user and the display.

In an example embodiment, a method includes determining a distance between a document processing device and a user, setting a font used on a display of the document processing device based at least in part on the distance, and displaying text on the display using the font. All or a portion of the text can be displayed on the font. The method can further include determining a change in the distance between the user and the document processing device and modifying the font based on the change in distance in substantially real time. The font can be modified based on size, the typeface, and attributes such as bold or unbolded text. The method can further include sensing via a sensor the distance from the user to the display of the document processing device.

In an example embodiment, a document processing device includes a printer configured to print user documents, a network interface configured to receive user documents and print job information, a sensor configured to sense the distance to a user who is in proximity to the document processing device, a display configured to display text to the user, such as instructions or other information, and a processor. The processor is configured to receive sensor data and determine a font to use based at least in part on the distance to the user. All or a portion of the text displayed on the display can use the determined font. The processor can be further configured to modify the size of the font based on a change in the distance of the user to the document processing device. The processor can be further configured to lock and unlock the size of the font in response to a user selection received by the document processing device.

### BACKGROUND

Document processing devices are in widespread use in many businesses and academic settings. Such devices include copiers, scanners, printers and facsimile machines. Today, one or more functions associated with such devices are combined in a single unit, referred to as a multifunction peripheral ("MFP") or multifunction device ("MFD"). As used herein, MFP includes any device having one or more document processing functions such as those noted above. MFPs are typically network connected to allow users to print remotely from their computers, scan documents that can be sent to a user's computer or a third party's computer (for example via email), copy documents, or fax documents to other people.

A user at the MFP can control the operations of the MFP via a user interface that is displayed on a display of the MFP. Because the display may be small, or because the text may be small, some users may have difficulty reading the text that is being displayed. This condition may require a user to retrieve reading glasses or other corrective lenses in order to read the text and operate the MFP effectively.

To this end, there is provided a document processing system, comprising:
an embedded controller including a processor, a memory in data communication with the processor, and a network interface in communication with the processor, the memory operable for storage of data and instructions, and the network interface configured for data communication via an associated network; and
a display in communication with the embedded controller,
wherein the embedded controller is configured to determine a font used for at least a portion of text displayed on the display based at least in part on the distance between a user and the display.

Preferably, the embedded controller is further configured to dynamically modify the font, in substantially real time, based on a change in the distance between the user and the display.

In the above document processing system, the font size is preferably increased, in substantially real time, when the distance between the user and the display is decreased, and wherein the font size is preferably decreased, in substantially real time, when the distance between the user and the display is increased.

Likewise, in the above document processing system, preferably the font is dynamically modified by one or more of changing the font to a bold font, changing the font to a normal font, changing the font to a narrow font, increasing the size of the font, decreasing the size of the font, or changing the font to a different font to increase readability by the user.

Preferably still, the document processing system further comprises:
a sensor in communication with the embedded controller that is configured to sense the distance between the user and the document processing system.

In the above document processing system, the sensor is preferably one or more of an image capturing sensor, and an ultrasonic transducer and receiver.

Preferably yet, the embedded controller is further configured to receive sensor data from the sensor, determine one or more attributes of the user based on the sensor data, and modify the font based at least in part on the one or more attributes.

In the above document processing system, each of the one or more attributes is preferably selected from the group consisting of an identity of the user, an approximate age of the user, an estimated height of the user, and a gender of the user.

Suitably, the sensor is configured to determine the distance between the display and face of the user.

Suitably still, the document processing system further comprises:
a user selectable input configured to receive a user indication to lock the font, and
wherein, in response to the user indication, the embedded controller is configured to lock the font.

Suitably yet, the network interface is further configured to receive data that includes one or more attributes of the user, and wherein the embedded controller is further configured to modify the font based at least in part on the one or more attributes of the user.

The invention also relates to a method comprising:
determining a distance between a document processing device and a user of the document processing device;
setting a font used on a display of the document processing device based at least in part on the distance; and
displaying at least a portion of text on the display using the font.

Preferably, the method according to claim 8, further comprises:
determining a change in the distance between the document processing device and the user; and
modifying the font, in substantially real time, based on the change in distance.

In the above method, preferably, modifying the font further comprises:
increasing a font size of the font as the distance decreases; and
decreasing the font size as the distance increases.

Conveniently, modifying the font includes one or more of changing the font to a bold font, changing the font to a normal font, changing the font to a narrow font, increasing the size of the font, decreasing the size of the font, or changing the font to a different font to increase readability by the user.

Conveniently still, determining the distance further comprises:
sensing, using a sensor associated with the document processing device, the distance from the user to the display of the document processing device.

Conveniently yet, the method further comprises:
determining one or more attributes of the user; and
modifying the font based at least in part on at least one attribute of the user.

The invention also relates to a document processing device, comprising:
a printer configured to print documents received from a plurality of users;
a network interface configured to receive one or more of a user document to be printed, and data associated with the user document to be printed;
a sensor configured to sense a distance between the document processing device and a user in proximity to the document processing device;
a display configured to display text to the user; and
a processor configured to receive sensor data from the sensor and determine, based at least in part on the distance to the user, a font to use in displaying at least a portion of text on the display.

Preferably, the processor is further configured to modify a size of the font based at least in part on a change in distance of the user in relation to the document processing device.

Preferably still, the processor is further configured to lock and unlock the size of the font in response to received user selections.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a diagram of a font size management system included in a multifunction peripheral according to an embodiment of the disclosure.
FIG. 2 is a block diagram of components of a multifunction peripheral according to an embodiment of the disclosure.
FIG. 3A is a first system overview diagram of a multifunction peripheral that includes a font size management function according to an embodiment of the disclosure.
FIG. 3B is a second system overview diagram of a multifunction peripheral that includes a font size management function according to an embodiment of the disclosure.
FIG. 4 is a system diagram of software components of a font size management system.
FIG. 5 is a flow diagram of example processes of a font management system according to an embodiment of the disclosure.

### DETAILED DESCRIPTION

The systems and methods disclosed herein are described in detail by way of examples and with reference to the figures. It will be appreciated that modifications to disclosed and described examples, arrangements, configurations, components, elements, apparatuses, devices methods, systems, etc. can suitably be made and may be desired for a specific application. In this disclosure, any identification of specific techniques, arrangements, etc. are either related to a specific example presented or are merely a general description of such a technique, arrangement, etc. Identifications of specific details or examples are not intended to be, and should not be, construed as mandatory or limiting unless specifically designated as such.

The systems and methods disclosed herein describe a font size management system for a document processing device. Suitable document processing devices include scanners, copiers, printers, plotters and fax machines. Two or more of these functions can be contained in a single device or unit, referred to as a multifunction peripheral (MFP) or multifunction device (MFD), which may also serve as an e-mail or other information routing gateway. As used herein, MFP includes any device having one or more document processing functions such as those noted above. While example embodiments described herein refer to MFPs, it will be appreciated that they may be also applied to single use devices, such as a printer.

The disclosed font size management system can automatically resize the font, or change the font, used on the document processing device or MFP to better accommodate the visual needs of the user. A user may have difficulty reading text on an MFP when configured with the default font. For example, instructions presented on the display of an MFP can sometimes be difficult to read by users with presbyopia or myopia, requiring a user to fetch reading glasses and return to the MFP. A user may desire to zoom in or zoom out to read text presented on a particular portion of the screen. Zooming in may require the user to scroll around the screen to find the desired section. Often, the user only needs to read the desired selection of text more clearly and therefore there is no need to enlarge the controls. The disclosed font management system addresses these and other problems associated with font management on the user interface of a MFP.

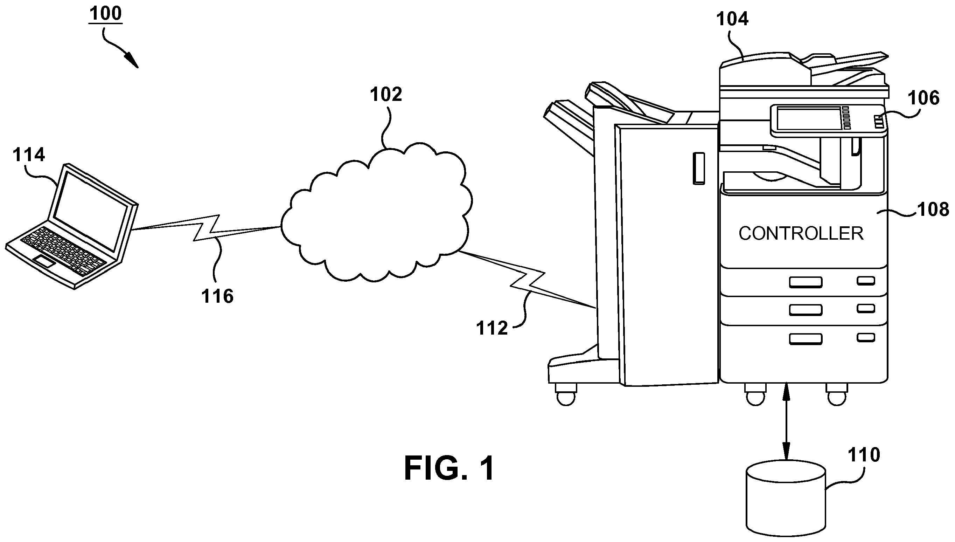

Turning to Figure 1, a document processing system 100 is presented. The document processing system 100 includes a network 102 that is in data communication with one or more document processing devices, suitably comprised of an MFP 104 as illustrated. MFP 104 is suitably operable for printing, faxing, scanning, copying, e-mailing, or any other document processing operation will be understood by one of ordinary skill in the art. In the illustrated embodiment, MFP 104 includes a user interface 106 configured to adjust the font size to accommodate the visual needs of the user as will be detailed further below. Operation of the MFP 104 is suitably managed by an embedded controller 108 and embedded data storage 110.

In the example embodiment of Figure 1, MFP 104 is coupled for data communication 112 with network 102, suitably comprised of a local area network (LAN), a remote local area network (RLAN), a wide area network (WAN) which may comprise the Internet, or any combination thereof. In the embodiment of Figure 1, one or more MFPs 104 can be in data communication with an administrator system 114 for configuring and managing the MFPs 104 such as setting default font sizes as described in detail below and other administrative functions.

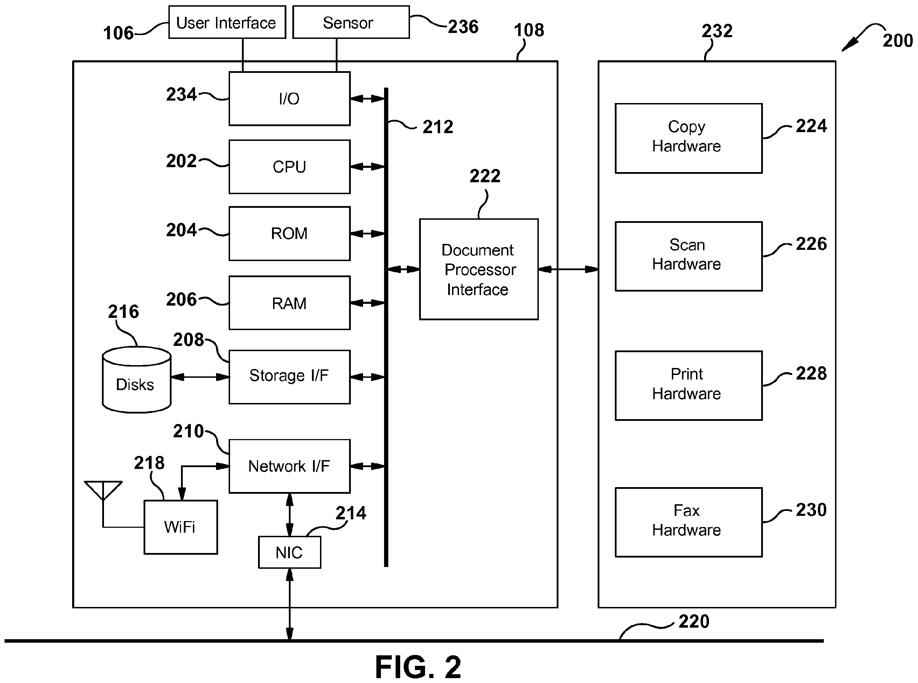

Turning now to Figure 2, presented are functional components 200 suitably comprising a multifunctional peripheral such as MFP 104 of Figure 1. Included is an example embodiment of controller 108 which is suitably comprised of a computer. Included in the example controller 108 are one or more processors, such as are illustrated by central processor unit (CPU) 202. Also included are non-volatile memories, such as read-only memory (ROM) 204, random access memory (RAM) 206, a storage interface 208, a network interface 210, and I/O interface 234. In the example embodiment, CPU 202, ROM 204, RAM 206, storage interface 208, network interface 210, and I/O interface 234 are in mutual data communication via bus 212. Storage interface 208 facilitates data access with bulk data storage, such as one or more disks 216, or any other suitable data storage such as a flash drive, solid state storage drive, CD, DVD or the like. Network interface 210 suitably provides for external data communication, such as with a network interface connection (NIC) 214 or WiFi interface 218. NIC 214 or WiFi interface 218 suitably provide for connection to an associated network 220. A document processor interface 222 is also in data communication with bus 212, and provides a gateway to copy hardware 224, scan hardware 226, print hardware 228 and fax hardware 230 which together comprise MFP functional hardware 232.

In the example embodiment of Figure 2, the input/output controller or I/O interface 234 suitably provides support for the user interface 106 and a sensor 236 for detecting the distance to the user, and can include support for a display screen, touchscreen inputs, key inputs such as keypad or keyboard inputs, audible outputs such as a speaker, and so forth. I/O interface 234 can support standardized inputs and outputs, such as VGA, HDMI, USB, and serial interfaces, or can be configured to support proprietary cabling and/or proprietary interfaces.

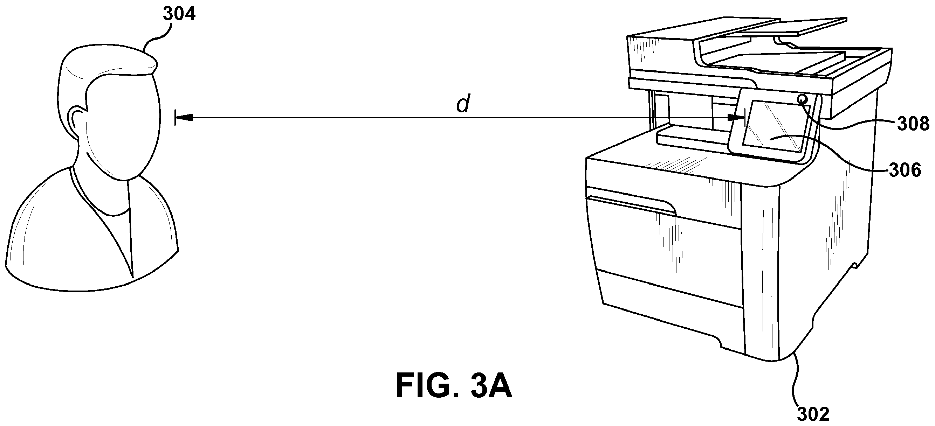

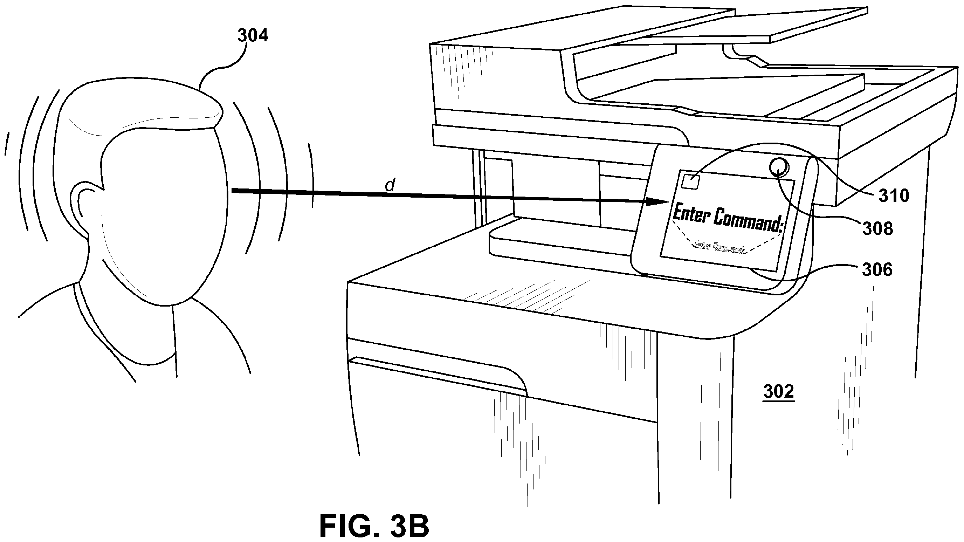

Turning now to Figures 3A and 3B, system overview diagrams of an MFP 302 with font management control are presented. In the system overview diagram of Figure 3A, when a user 304 is present at an MFP 302, the MFP 302 determines the distance, d, from the MFP 302. Based at least in part on the determined distance, d, of the user 304 from the MFP 302, the MFP 302 alters or sets the font size used on the display 306 of the MFP 302. For example, the MFP 302 can initially set the font or font size based on the determined distance, d, of the user 304 and when the distance, d, increases or decreased, the MFP 302 can dynamically decrease or increase the font size or otherwise change the font to enhance the readability by the user 304.

In various embodiments, the MFP 302 can determine the identity of the user 304 or details about the user 304 such as the approximate age, height, or gender of the user 304. For example, the MFP 302 can determine the approximate age, height, and gender of the user 304 based on sensor data, user profile data associated with a print job, or a combination of sensor data and user profile data. In these embodiments, the MFP 304 can set or alter the size of the font used on the display 306 based on one or more of the determined identity, age, height, gender, and/or distance, d, of the user 304. For example, based on the identity of the user, the MFP 304 can set the font to a previously accepted font that was used by the user on that MFP 304 or another MFP. In a configuration, the identity of the user can be determined from one or more of sensor data or received document properties. In a configuration, the user 304 can manually set the font.

In an embodiment, the MFP 302 determines the distance, d, to the user 304 using a sensor 308. In a configuration, the sensor 308 can be an image sensor, such as a camera or other light sensing element or elements. In this configuration, the sensor 308 and sensor data can be used by the MFP 302 to determine the approximate age, height, and/or gender of the user 304. In a configuration, the sensor 308 can be an ultrasonic transducer and receiver, a range finding sensor, or proximity sensor. In a configuration, the distance can be determined, at least in part, based on a device on the user, such as a smartphone, computing device, tag, or another device as would be understood in the art. Other sensors and sensing technologies can be used to determine the distance, d, to the user 304 as would be understood in the art.

In the system overview diagram of Figure 3B, when a user 304 is present at an MFP 302, the MFP 302 can determine whether the user 304 is moving towards the display 306 of the MFP 302. Such movement can be indicative of a user 306 who is having difficulty reading the display 306 of the MFP 302 and therefore moving closer to the display 306 in order to read what is displayed. In an embodiment, movement of the face of the user 304 towards the display 306 can be distinguished from general movement of the user 304 towards the MFP 302. Such movement can be used to distinguish between whether a user 304 is merely approaching the MFP 302 or whether the user's face is specifically moving towards the display 306 in order to better read what is being displayed. In another embodiment, movement of the face of the user 304 towards the display 306 can be distinguished from movement of the user 304 generally towards the MFP 302 but not specifically towards the display 306. Such movement can be used to distinguish between whether the user 306 is specifically moving towards the display 306 in order to better read what is being displayed, or generally interacting with the MFP 302. In these embodiments, the MFP 302 can adjust or set the size of the font used on the display 306. For example the MFP 302 can dynamically increase the font size, change the font to a bold font, or select a particular font, for example a high contrast font designed to be more readable by a user with a particular eye condition such as presbyopia, myopia, or other vision conditions as would be understood in the art.

In an embodiment, the user 304 is able to freeze or lock the device font. For example, if the MFP 302 has adjusted the font or font size such that it meets the user's needs, the user 304 can press a selection to freeze or lock the device font. For example, a control 310 on the display 106 can allow the user 304 to freeze or lock the font. The control can be a soft control or a physical button or buttons. In a configuration, the user 304 can release the frozen or locked device font thereby allowing the MFP 302 to dynamically adjust the font.

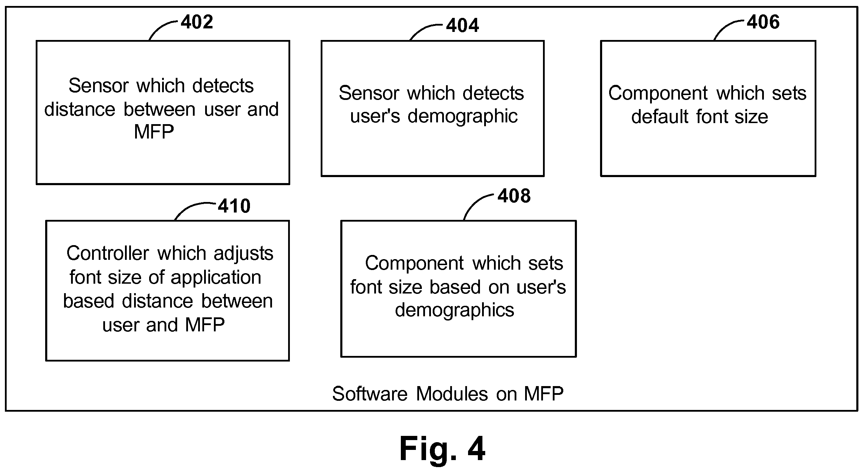

Referring now also to Figure 4, example software modules blocks for an MFP 100 with font size management are presented. A first software module block 402 can detect the distance between a user and the MFP 100, as described above, using for example sensor data. A second software module block 404 can detect the user's age or other demographic information, as described above, using for example user profile data or sensor data. A third software module block 406 can determine the default font size. For example, the default font size can be determined, at least in part, based on the location of the MFP 100. For example, if the MFP 100 is located in a facility associated with an older population of individuals such as a residential care facility for the elderly, then the default font size can be set to a larger, more easily read font setting. Whereas if the MFP 100 is in a school setting, then a smaller default font size can be set on the MFP 100. A system administrator can set the default font size as described above for Figure 1. A fourth software module block 408 can dynamically set the font size based on the user's demographics as determined by the second software module block 404, as described above. A fifth software module 410 can dynamically adjust the font size based on the distance between the user and the MFP 100, as described above. The font size can be determined based on any suitable combination of sensor data and algorithms.

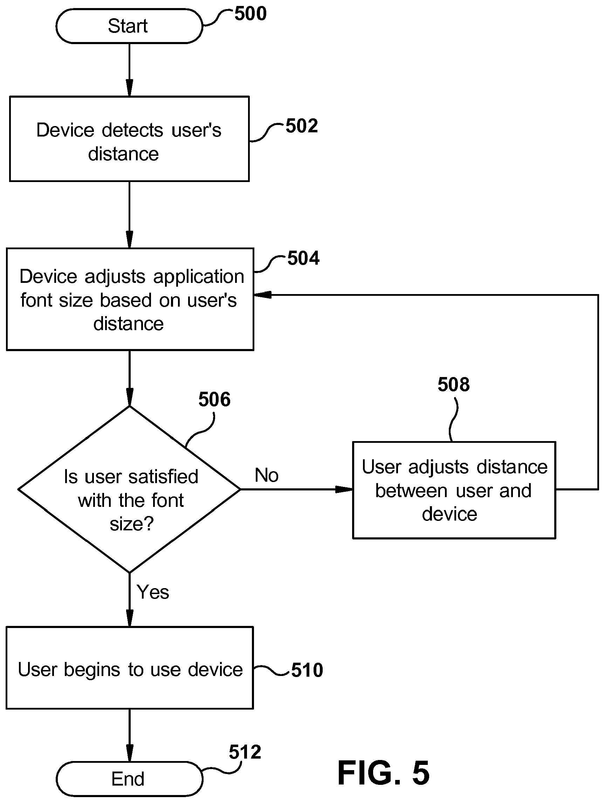

Referring now also to Figure 5, example operations of an example MFP with font size management 100 are presented. Processing starts at process block 500 labeled "START" and continues to process block 502.

In process block 502, the MFP detects the distance to the user. As described above, the distance can be the distance from the MFP to the user, the distance from the display of the MFP to the user, and so forth. As described above the distance can be determined from any suitable sensor including, but not limited to, a camera positioned in the MFP. Processing continues to process block 504.

In process block 504, the font management system dynamically adjusts the font size based at least in part on the determined distance to the user as determined in process block 502. Processing continues to decision block 506.

In decision block 506, if the user is satisfied with the font size, then processing continues to process block 510, otherwise processing continues to process block 508.

In In process block 508, the user can move towards or away from the MFP. Processing returns to process block 504 where the user's movements cause the font management system to dynamically adjust the font size larger or smaller based at least in part on the distance of the user from the MFP.

In In process block 510, the user begins to the use the MFP. In a configuration, when the user begins to the use the MFP, the font management system locks or freezes the font size. Processing terminates at end block 512 labeled, "END".

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the framework and scope of the inventions.

## Claims

1. A document processing system, comprising:
an embedded controller including a processor, a memory in data communication with the processor, and a network interface in communication with the processor, the memory operable for storage of data and instructions, and the network interface configured for data communication via an associated network; and
a display in communication with the embedded controller,
wherein the embedded controller is configured to determine a font used for at least a portion of text displayed on the display based at least in part on the distance between a user and the display.

2. The document processing system according to claim 1, wherein the embedded controller is further configured to dynamically modify the font, in substantially real time, based on a change in the distance between the user and the display.

3. The document processing system according to claims 1 or 2, further comprising:
a sensor in communication with the embedded controller that is configured to sense the distance between the user and the document processing system.

4. The document processing system according to claim 3, wherein the embedded controller is further configured to receive sensor data from the sensor, determine one or more attributes of the user based on the sensor data, and modify the font based at least in part on the one or more attributes.

5. The document processing system according to claim 3 or 4, wherein the sensor is configured to determine the distance between the display and face of the user.

6. The document processing system according to any one of claims 1 to 5, further comprising:
a user selectable input configured to receive a user indication to lock the font, and
wherein, in response to the user indication, the embedded controller is configured to lock the font.

7. The document processing system according to any one of claims 1 to 6, wherein the network interface is further configured to receive data that includes one or more attributes of the user, and wherein the embedded controller is further configured to modify the font based at least in part on the one or more attributes of the user.

8. A method comprising:
determining a distance between a document processing device and a user of the document processing device;
setting a font used on a display of the document processing device based at least in part on the distance; and
displaying at least a portion of text on the display using the font.

9. The method according to claim 8, further comprising:
determining a change in the distance between the document processing device and the user; and
modifying the font, in substantially real time, based on the change in distance.

10. The method according to claim 9, wherein modifying the font includes one or more of changing the font to a bold font, changing the font to a normal font, changing the font to a narrow font, increasing the size of the font, decreasing the size of the font, or changing the font to a different font to increase readability by the user.

11. The method according to any one of claims 8 to 10, wherein determining the distance further comprises:
sensing, using a sensor associated with the document processing device, the distance from the user to the display of the document processing device.

12. The method according to any one of claims 8 to 11, further comprising:
determining one or more attributes of the user; and
modifying the font based at least in part on at least one attribute of the user.

13. A document processing device, comprising:
a printer configured to print documents received from a plurality of users;
a network interface configured to receive one or more of a user document to be printed, and data associated with the user document to be printed;
a sensor configured to sense a distance between the document processing device and a user in proximity to the document processing device;
a display configured to display text to the user; and
a processor configured to receive sensor data from the sensor and determine, based at least in part on the distance to the user, a font to use in displaying at least a portion of text on the display.

14. The document processing device according to claim 13, wherein the processor is further configured to modify a size of the font based at least in part on a change in distance of the user in relation to the document processing device.

15. The document processing device according to claim 13 or 14, wherein the processor is further configured to lock and unlock the size of the font in response to received user selections.
